(19) Europäisches Patentamt
European Patent Office
Office européen des brevets

(11) **EP 3 033 170 B1**

(12) **EUROPEAN PATENT SPECIFICATION**

(45) Date of publication and mention
of the grant of the patent:
**02.12.2020 Bulletin 2020/49**

(21) Application number: **14753141.2**

(22) Date of filing: **15.08.2014**

(51) Int Cl.:
*B01J 23/62* (2006.01)          *C01B 15/029* (2006.01)
*B01J 21/06* (2006.01)          *B01J 21/08* (2006.01)
*B01J 23/14* (2006.01)          *B01J 23/42* (2006.01)
*B01J 23/44* (2006.01)          *B01J 23/835* (2006.01)
*B01J 35/00* (2006.01)          *B01J 37/02* (2006.01)

(86) International application number:
**PCT/GB2014/052512**

(87) International publication number:
**WO 2015/022548 (19.02.2015 Gazette 2015/07)**

(54) **CATALYST FOR DIRECT SYNTHESIS OF HYDROGEN PEROXIDE**

KATALYSATOR ZUR DIREKTEN SYNTHESE VON WASSERSTOFFPEROXID

CATALYSEUR POUR LA SYNTHÈSE DIRECTE DE PEROXYDE D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2013 GB 201314600**

(43) Date of publication of application:
**22.06.2016 Bulletin 2016/25**

(73) Proprietor: **University College Cardiff Consultants, Ltd.**
**Cardiff, South Glamorgan CF24 0DE (GB)**

(72) Inventors:
• **FREAKLEY, Simon**
**Stoke on Trent**
**Staffordshire ST27BY (GB)**
• **HUTCHINGS, Graham**
**Northallerton**
**North Yorkshire DL63BA (GB)**

(74) Representative: **Haseltine Lake Kempner LLP**
**Redcliff Quay**
**120 Redcliff Street**
**Bristol BS1 6HU (GB)**

(56) References cited:
EP-A1- 2 705 901          WO-A1-2011/114105
WO-A2-2013/130796          GB-A- 1 201 072
GB-A- 1 346 856          GB-A- 2 353 734
US-A- 5 378 450          US-A1- 2011 137 029

**Description**

**TECHNICAL FIELD**

The present invention is directed to catalysts suitable for direct synthesis of hydrogen peroxide, to a process for manufacturing said catalysts, to the use of said catalysts for direct synthesis of hydrogen peroxide, and to a method of manufacturing hydrogen peroxide by direct synthesis using said catalysts.

**BACKGROUND OF THE INVENTION**

Hydrogen peroxide is a simple inorganic molecule and since its discovery has been an important commodity chemical with both industrial and domestic uses. In 2006 the annual production of $H_2O_2$ stood at around 4 million metric tonnes increasing by 4 % annually. Around 40 % of $H_2O_2$ is used in the pulp and paper industry as an alternative to chlorine containing oxidants such as chlorine dioxide and sodium chlorate. Another major use is in water purification where $H_2O_2$ has been shown to destroy thiocyanate, nitrate, chlorine, hypochlorite and other potentially toxic chemicals which may be present in waste water.

Over 90 % of the world's $H_2O_2$ is manufactured by the indirect anthraquinone process, otherwise known as the auto-oxidation process. This process involves the hydrogenation of a substituted anthraquinone using a nickel or palladium catalyst to form a diol. The diol is then oxidised by an $O_2$ rich aid feed to form the original anthraquinone and give $H_2O_2$ as a by-product. While this process is now large scale and energy efficient, there remain a number of problems associated with the anthraquinone process. The anthraquinone process is only viable on a large scale which means that concentrated $H_2O_2$ (70 wt%) solutions need to be stored and transported which can be hazardous, and the solutions may require the addition of acid or halide as stabilisers. While the process is operated at mild temperature and pressure, anthraquinone derivatives can be formed irreversibly which do not participate in the formation of $H_2O_2$. This means that the original anthraquinone molecule needs to be continually added to maintain the efficiency of the system. The use of a highly active hydrogenation catalyst can also result in the decomposition of the anthraquinone again reducing the efficiency of the system.

The direct synthesis of $H_2O_2$ by the combination of molecular $H_2$ and $O_2$, removing the need for an anthraquinone intermediate would provide a much greener route to $H_2O_2$ as the reaction would be 100% atom efficient. While the combination of molecular $H_2$ and $O_2$ seems conceptually a simple reaction there are inherent problems associated with the process. One of these problems is that catalysts which are active for the synthesis of $H_2O_2$ also tend to be active for the hydrogenation of $H_2O_2$ and the direct combustion of $H_2$ and $O_2$, both reactions producing water. For example, monometallic Pd catalysts have been studied in the literature for the direct synthesis of $H_2O_2$. However Pd catalysts which are active for $H_2O_2$ synthesis also tend to be active for the subsequent hydrogenation and decomposition of $H_2O_2$ resulting in lower overall yield and reduced $H_2O_2$ selectivity. The addition of halides and acids, either added to the reaction solution or incorporated into the catalyst, have been used to suppress the competing hydrogenation and decomposition reactions leading to improved yields of $H_2O_2$. It has been previously shown that Au-Pd bimetallic catalysts are more active and selective for the direct synthesis of $H_2O_2$ than monometallic palladium catalysts (see, for example, WO-A-2007007075 and WO-A-2012171892).

In order to scale up the direct process to an economically viable size, catalyst cost is an important factor that has to be taken into account and any reduction in the cost, while still maintaining the efficiency of the system, would be advantageous. There are various ways to achieve this including decreasing the amount of the active precious metals present in the catalyst. Another way would be to develop alternative Pd-based bimetallic catalysts containing an inexpensive second metal as a replacement for Au. However, to date, there are no such bimetallic catalysts reported that can compete with the best Au-Pd bimetallic catalysts for the direct synthesis of $H_2O_2$.

Another major issue is the stability of catalysts. Any commercially viable catalyst would need to be re-usable without major reduction in $H_2O_2$ productivity. Indeed, for any industrial catalytic process to be viable a stable catalyst is desirable to prevent the otherwise constant need to replace the catalyst and maintain a high yield of the desired product over time.

Thus, there is ongoing need to develop new catalyst for direct synthesis of $H_2O_2$ which are economically viable to produce and maintain.

**SUMMARY OF THE INVENTION**

In accordance with a first aspect of the present invention, there is provided a catalyst suitable for direct synthesis of hydrogen peroxide, said catalyst comprising catalyst support, tin and one or more of palladium, platinum and nickel, wherein said catalyst is obtainable by a process comprising: (i) preparing, providing or obtaining a catalyst precursor comprising said catalyst support, tin and one or more of palladium, platinum and nickel (ii) heating the catalyst precursor in a first step, forming a heat-treated catalyst, (iii) treating the heat-treated catalyst of step (ii) under reducing conditions, forming a reduced catalyst, and (iv) treating the reduced catalyst of step (iii) under oxidising conditions, wherein the oxidising conditions comprise heating the reduced catalyst in an oxidizing atmosphere at an elevated temperature, wherein the elevated temperature is from 250 °C to 800 °C.

In accordance with a second aspect of the present invention, there is provided a catalyst suitable for direct synthesis of hydrogen peroxide, wherein said catalyst is a bimetallic catalyst comprising catalyst support, tin and palladium,
wherein the catalyst comprises from 1.0 wt.% to 6 wt. % tin and from 0.5 wt. % to 3.5 wt. % palladium, based on the total weight of the catalyst.

In accordance with a third aspect of the present invention, there is provided a process for manufacturing a catalyst according to the first or second aspects of the present invention, said process comprising (i) depositing tin and one or more of palladium, platinum and nickel precursors onto a catalyst support to form a catalyst precursor, (ii) oxidizing the catalyst precursor in a first oxidation step to form an oxidised catalyst, (iii) reducing the oxidised catalyst to form a reduced catalyst and (iv) oxidizing the reduced catalyst in a second oxidising step, wherein the temperature of the second oxidising step is from 250 °C to 800 °C. In accordance with a fourth aspect, the present invention is directed to the use of a catalyst of the first or second aspects of the invention, or obtainable by the process of the third aspect of the invention, for the direct synthesis of hydrogen peroxide.
In accordance with a fifth aspect of the present invention, there is provided a process of manufacturing hydrogen peroxide by direct synthesis, said process comprising converting hydrogen and oxygen to hydrogen peroxide in the presence of a catalyst according to the first or second aspects of the invention.

## BRIEF DESCRIPTION OF THE DRAWINGS

Figure 1 shows the TPR profiles of monometallic Sn and Pd catalysts supported on $TiO_2$ and also a bare $TiO_2$ support after identical calcination treatment at 500°C for 3 hours.

Figure 2 shows the TPR profile of various bimetallic catalysts of the invention supported on $TiO_2$.

Figure 3 shows XRD patterns of monometallic 5% Pd, 5% Sn and bimetallic 2.5% Pd 2.5% Sn catalysts supported on silica after calcination at 500 °C for 3 hours.

Figure 4 shows a selection of XRD patterns for catalysts having variable Sn:Pd ratio.

Figure 5 shows a selection of XRD patterns obtained in order to demonstrate that the absence of PdO peaks in $Pd/Sn/SiO_2$ catalysts was not due to the Pd being below the detection limits of the technique.

Figure 6 shows the Pd(3d) XPS spectra of monometallic and bimetallic catalysts after calcination at 500 ºC for 3 hours.

Figure 7 shows the Pd(3d) XPS spectra for a 1% Pd / 4% Sn / $SiO_2$ catalyst after calcination at 500 ºC for 3 hours and subsequent reduction at various temperatures for 2 h under 5% $H_2$ / Ar.

Figure 8 shows the Pd(3d) spectra of a reduced 1% Pd / 4% Sn / $SiO_2$ after subsequent heat treatment at 400 °C in air for 2 hours and 3 hours.

## DETAILED DESCRIPTION OF THE INVENTION

*Catalyst and catalyst preparation*

In accordance with the first aspect of the invention, the catalyst comprises catalyst support, tin and one or more of palladium, platinum and nickel. The combined amount of tin and one or more of palladium, platinum and nickel is less than 15 wt. % of the catalyst, based on the total weight of the catalyst. Further, the catalyst comprises at least about 0.25 wt. % of one or more of palladium, platinum and nickel, based on the total weight of the catalyst.

In certain embodiments, the combined amount of tin and one or more of palladium, platinum and nickel is less than about 14 wt % of the catalyst, for example, less than about 13 wt. % of the catalyst, or less than about 12 wt. % of the catalyst, or less than about 11 wt. % of the catalyst, or less than about 10 wt. % of the catalyst, or less than about 9.0 wt. % of the catalyst, or less than about 8.0 wt. % of the catalyst, or less than about 7.0 wt. % of the catalyst, or less than about 6.0 wt. % of the catalyst. In certain embodiments, the combined amount of tin and one or more of one or more of palladium, platinum and nickel is at least about 0.5 wt. % of the catalyst, subject to the proviso that the catalyst comprises at least about 0.25 wt. % of one or more of palladium, platinum and nickel.

In certain embodiments, the combined amount of tin and one or more of palladium, platinum and nickel is at least about 0.75 wt. % of the catalyst, for example, at least about 1.0 wt. % of the catalyst, or at least about 1.5 wt. % of the catalyst, or at least about 2 wt. % of the catalyst, or at least about 2.5 wt. % of the catalyst, or at least about 3 wt. % of the catalyst, or at least about 4 wt. % of the catalyst. In certain embodiments, the combined amount of tin and one or more of palladium, platinum and nickel comprises from about 0.5 to less than 15 wt. % of the catalyst, for example, from about 1.0 to about 12 wt. % of the catalyst, or from about 2.0 to about 10 wt. % of the catalyst, or from about 3.0 to about 8 wt. % of the catalyst, or from about 4.0 to about 7 wt.% of the catalyst, or from about 4.0 to about 6.0 wt. % of the catalyst. In certain embodiments, weight ratio of tin to one or more of palladium, platinum and nickel is from about 8:1 to about 1:8, for example, from about 6:1 to about 1:6, or from about 5:1 to about 1:5, or from about 4:1 to about 1:4, or from about 3:1 to about 1:3, or from about 2:1 to about 1:2, or from about 1.5:1 to about 1:1.5, or about 1:1.

In certain embodiments, the catalyst is a bimetallic catalyst comprising tin and palladium, with the proviso that the catalyst comprises at least about 0.25 wt. % palladium. In certain embodiments, the combined amount of tin and palladium is less than about 14 wt % of the catalyst, for example, less than about 13 wt. % of the catalyst, or less than about 12 wt. % of the catalyst, or less than about 12 wt. % of the catalyst, or less than about 11 wt. % of the catalyst, or less than about 10 wt. % of the catalyst, or less than about 9.0 wt. % of the catalyst, or less than about 8.0 wt. % of the catalyst, or less than about 7.0 wt. % of the catalyst, or less than about 6.0 wt. % of the catalyst.

In certain embodiments, the combined amount of tin and palladium is at least about 0.5 wt. % of the catalyst, subject to the proviso that the catalyst comprises at least about 0.25 wt. % of palladium. In certain embodiments, the combined amount of tin and palladium is at least about 0.75 wt. % of the catalyst, for example, at least about 1.0 wt. % of the catalyst, or at least about 1.5 wt. % of the catalyst, or at least about 2 wt. % of the catalyst, or at least about 2.5 wt. % of the catalyst, or at least about 3 wt. % of the catalyst, or at least about 4 wt. % of the catalyst.

In certain embodiments, the combined amount of tin and palladium comprises from about 0.5 to less than 15 wt. % of the catalyst, for example, from about 1.0 to about 12 wt. % of the catalyst, or from about 2.0 to about 10 wt. % of the catalyst, or from about 3.0 to about 8 wt. % of the catalyst, or from about 4.0 to about 7 wt.% of the catalyst, or from about 4.0 to about 6.0 wt. % of the catalyst. In certain embodiments, weight ratio of tin to palladium is from about 8:1 to about 1:8, for example, from about 6:1 to about 1:6, or from about 5:1 to about 1:5, or from about 4:1 to about 1:4, or from about 3:1 to about 1:3, or from about 2:1 to about 1:2, or from about 1.5:1 to about 1:1.5, or about 1:1.

In certain embodiments, the catalyst comprises from about 0.5 wt.% to about 12 wt. % tin and from about 0.25 wt. % to about 6 wt. % palladium, for example, from about 0.5 wt. % to about 8 wt. % tin and from about 0.5 wt. % to about 4 wt. % palladium, or from about 1.0 wt. % to about 6 wt. % tin and from about 0.5 wt. % to about 3. 5 wt. % palladium, based on the total weight of the catalyst. In certain embodiments, the catalyst comprises from about 2.0 wt. % to about 6.0 wt. % palladium and from about 0.5 wt. % to about 3 wt. % tin, for example, from about 3.0 wt. % to about 5.0 wt. % palladium and from about 0.5 wt. % to about 2.0 wt. % tin.

In certain embodiments, the catalyst comprises about 4 % palladium and about 1 wt. % tin, or about 3 wt. % palladium and about 2 wt. % tin, or about 2 wt. % palladium and about 3 wt. tin, or about 1 wt. palladium and about 2 wt. % tin, based on the total weight of the catalyst.

In certain embodiments, the catalyst comprises other catalytically active metals other than tin and one or more of palladium, platinum and nickel. For example, the catalyst may comprise one or more of Ru, Rh, Os, Ir, Ag and Au. If present, the metal or metals will typically be present in amounts no greater than about 5.0 wt. % of the catalyst, based on the total weight of the catalyst, for example, less than about 3.0 wt.% of the catalyst, or less than about 2.0 wt. % of the catalyst, or less than about 1.0 wt. % of the catalyst, or less than about 0.5 wt. % of the catalyst, or less than about 0.25 wt. % of the catalyst. For the avoidance of doubt, if metals other than tin and one or more of palladium, platinum and nickel are present, the amount of such metal is in addition to the total combined amount of tin and one or more of palladium, platinum and nickel being less than 15 wt. % of the catalyst.

In certain embodiments, the catalyst support is an organic or inorganic support, for example, catalyst support selected from the group consisting of carbon supports, oxide supports and silicate supports, for example, from $SiO_2$, $TiO_2$, $Al_2O_3$, $CeO_2$, $Nb_2O_5$, $W_2O_3$, $ZrO_2$, $Fe_2O_3$, silica-alumina, molecular sieves and zeolites, and mixtures thereof. Suitable carbon supports are graphite, carbon black, glassy carbon, activated carbon, highly orientated pyrolytic graphite, single-walled and multi-walled carbon nanotubes. In certain embodiments, the catalyst support comprises or is an oxide support, for example, an oxide support selected from $SiO_2$, $TiO_2$, $Al_2O_3$, $CeO_2$, $Nb_2O_5$, $W_2O_3$, $ZrO_2$, $Fe_2O_3$ and mixtures thereof. In certain embodiments, the catalyst support is an acidic catalyst support. Acidic catalyst supports include, for example, niobic acid support, heteropolyacid-based support, acid-treated carbon support, sulfated zirconia/silica support, and a support comprising an oxide other than zirconium oxide (e.g., silica) and a precipitate layer of zirconium oxide. Heteropolyacid supports include supports of the formula $Cs_xH_{3-x}PW_{12}O_{40}$, where x is from about 2.0 to about 2.9, which may be prepared by the addition of a Cs source, such as $CsNO_3$, to aqueous $H_3PW_{12}O_{40}$. In an advantageous embod-

iment, the catalyst support comprises or is $SiO_2$. In another advantageous embodiment, the catalyst support comprises or is $TiO_2$. In certain embodiments, the catalyst does not comprise carbon supports.

The catalyst support may comprise at least about 60 wt. % of the catalyst, based on the total weight of the catalyst, for example, at least about 70 wt. % of the catalyst, or at least about 80 wt. % of the catalyst, or at least about 85 wt. % of the catalyst, or at least about 90 wt. of the catalyst, or at least about 91 wt. % of the catalyst, or at least about 92 wt. % of the catalyst, or at least about 93 wt. % of the catalyst, or at least about 94 wt. % of the catalyst, or equal to or greater than about 95 wt.% of the catalyst. In certain embodiments, the catalyst support comprises from about 60 wt. % to about 99 wt. % of the catalyst, for example, from about 70 wt. % to about 99 wt. % of the catalyst, or from about 80 wt. % to about 97 wt. % of the catalyst, or from about 85 wt. % to about 95 wt. % of the catalyst, or from about 90 wt. % to about 95 wt. % of the catalyst.

In an advantageous embodiment, the catalyst is a bimetallic catalyst comprising tin and palladium and the catalyst support comprises or is $SiO_2$. In certain embodiments thereof, the catalyst comprises from about 0.25 wt. % to about 3.0 wt. % palladium and from about 2.0 wt. % to about 6.0 wt. % tin, for example, from about 0.5 to about 2.0 wt. % palladium and from about 3.0 wt. % to about 5.0 wt. tin, or from about 0.75 wt. % to about 1.25 wt. palladium and from about 3.5 wt. % to about 4.5 wt.% tin, or about 1 wt.% palladium and about 4 wt. % tin, or from about 1.0 wt. % palladium and about 4.0 wt. % tin.

In another advantageous embodiment, the catalyst is a bimetallic catalyst comprising tin and palladium and the catalyst support comprises or is $TiO_2$. In certain embodiments therefore, the catalyst comprises from about 1.5 wt. % to about 5 wt. % palladium and from about 0.25 wt. % to about 4.0 wt. % tin, for example, from about 2.0 wt. % to about 4.0 wt. % palladium and from about 1.0 wt. % to about 3.0 wt. % tin, or from about 2.5 wt.% to about 3.5 wt. % palladium and from about 1. 5 wt. % to about 2.5 wt. % tin, or about 3 wt. % palladium and about 2 wt. % tin, or from about 3.0 wt. % palladium and about 2.0 wt. % tin.

The catalyst of the invention may be characterised in terms of one or more properties, such as a Temperature Programmed Reduction (TPR) profile or X-ray powder diffraction pattern (XRPD). References to known X-ray powder diffraction patterns means, unless otherwise stated, the X-ray powder diffraction as according to the International Centre for Diffraction Data (ICDD) database (www.icdd.com). The ICDD meets the requirements of standard ISO 9001:2008 pertaining to centralized assembling, recording, designing, editing and publishing of diffraction data for use by scientists worldwide and providing technical forums for promoting diffraction and related materials analysis techniques in science and technology.

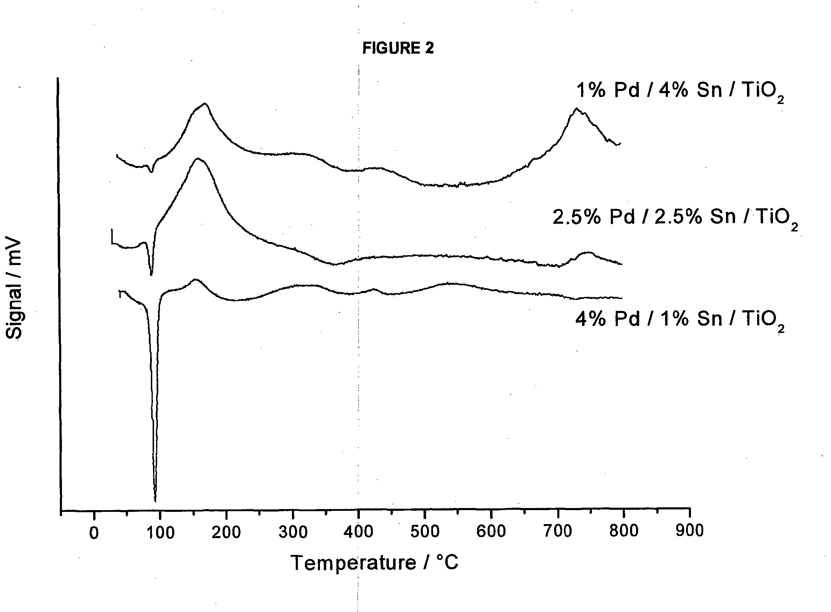

In certain embodiments in which the support comprises or is $TiO_2$, the catalyst has a TPR profile, as determined in accordance with the method described herein, characterised by the presence of a relatively broad, positive peak (mV) between about 140°C and 200°C, for example, between about 150 °C and about 180 °C. In certain embodiments, said catalyst comprises from about 0.5 wt. % to about 5 wt. % palladium, and from about 0.5 wt. % to about 5 wt. % Sn. A TPR profile of an exemplary catalyst of the invention is depicted Figure 2.

In certain embodiments in which the support comprises or is $SiO_2$, the catalyst has a powder X-ray diffraction pattern, as determined in accordance with the method described herein, characterised by the absence of any discernable peaks (2θ) attributable to Pd-containing or Sn-containing species above the $SiO_2$ support diffraction pattern, for example, the absence of any discernable peak at 34°±0.5 2θ attributable to Pd-containing or Sn-containing species, e.g. PdO or SnO as according to the ICCD database.

In certain embodiments, the catalyst of the second aspect of the invention may be prepared by any suitable preparative method, preferably starting from suitable metal precursors. For example, the tin and one or more of palladium, platinum and nickel, as catalytically active component, may be deposited onto the catalyst support in the form of metal oxides or metal ions, e.g., metal salt, by any known method to form a catalyst precursor. The tin and one or more of palladium, platinum and nickel may be deposited simultaneously or sequentially, advantageously simultaneously. The catalyst precursor is then transformed into the corresponding catalyst via at least one of a heat treatment, reductive treatment, e.g., chemical reduction in the presence of a reducing agent, or electrochemical reduction. Heat treatment may be conducted a temperature of from about 250 °C to about 600 °C, or from about 300 °C to about 550°C, or from about 350 °C to about 550°C, or from about 400 °C to about 550 °C, or from about 450 °C to about 550 °C. Heat treatment may be conducted under any type of atmosphere such as, for example, oxygen containing atmosphere, inert atmosphere or reducing atmosphere. In certain embodiments, the heat treatment may be conducted under air, oxygen, nitrogen, argon, hydrogen or mixtures thereof. After deposition of the metal precursors onto the catalyst support, a catalyst precursor may be recovered by any suitable separation method, such as evaporation, filtration, decantation and/or centrifugation. The recovered catalyst precursor may be washed and dried, for example, at a temperature of between about 50 °C and 150°C, typically greater than about 100 °C, for example, greater than about 105 °C, and typically, less than about 130 °C, for example, less than about 120 °C, e.g., a temperature of from about 105 °C to about 115 °C. Drying may be conducted over a suitable period of time, for example, up to about 24 hours, for example, from about 8 to 20 hours, or from about 12 to about 20 hours, or from about 12 to about 20 hours, or from about 14 to about 20 hours, or from about 12 to 18 hours, or from about 15 to about 17 hours. The catalyst precursor may then be heat treated in accordance with the methods described above.

In accordance with the catalyst of the first aspect of the invention, and in advantageous embodiments of the catalyst of the section aspect of the invention, the catalyst is obtainable or prepared by a process comprising: (i) preparing, providing or obtaining a catalyst precursor comprising said catalyst support, tin and one or more of palladium, platinum and nickel (ii) heating the catalyst precursor in a first step, forming a heat-treated catalyst, (iii) treating the heat-treated catalyst of step (ii) under reducing conditions, forming a reduced catalyst, and (iv) treating the reduced catalyst of step (ii) under oxidising conditions. It has surprisingly been found that the use of a catalyst prepared in accordance with the preceding steps enables the preparation of hydrogen peroxide with an increased productivity and/or suppressed hydrogenation activity and/or increased selectivity to hydrogen peroxide. Indeed, in certain embodiments, it is may be possible to completely inhibit hydrogenation. Furthermore, it has surprisingly been found that catalysts of the invention exhibit improved stability and may be reused without any significant reduction in $H_2O_2$ productivity.

In preferred embodiments, the catalyst comprises tin and palladium, for example, a bimetallic catalyst comprising tin and palladium. Hereinafter, the invention may tend to be discussed in terms of tin and palladium, and in relation to aspects where a catalyst and/or catalyst precursor comprising tin and palladium is processed and/or treated. The invention should not be construed as being limited to such embodiments, and it will be understood that reference to tin and palladium includes references to tin and one or more of palladium, platinum and nickel.

The relative amounts and weight ratios of tin, palladium and catalyst support may be selected accordingly in order to obtain a catalyst having the desired catalyst support and relative amounts of tin and palladium.

In certain embodiments, the step of preparing, providing or obtaining a catalyst precursor comprising catalyst support, tin and palladium comprises depositing tin and palladium onto the catalyst support in form of tin/palladium metal oxides or tin and palladium ions, for example, using a tin salt and palladium salt, e.g., a tin (IV) salt or a a tin(II) salt, preferably a tin(IV) salt). Exemplary salts include the nitrate or chloride or sulphate or carbonate. Preferably the salt is a chloride or nitrate, e.g., $SnCl_4.xH_2O$ and $Pd(NO_3)_2.xH_2O$, wherein x is from 1 to 6, for example, $SnCl_4.5H_2O$ and $Pd(NO_3)_2.2H_2O$. The tin and palladium may be deposited simultaneously or sequentially, advantageously simultaneously on the catalyst support. For example, an aqueous solution of tin salt and palladium salt may be prepared, followed by addition of the catalyst support. After deposition of the metal precursors onto the catalyst support, the catalyst precursor composition is recovered by any suitable separation method, such as evaporation, filtration, decantation and/or centrifugation. The recovered catalyst precursor may be washed and dried, for example, at a temperature of between about 50 °C and 150°C, typically greater than about 100°C, for example, greater than about 105°C, and typically, less than about 130 °C, for example, less than about 120 °C, e.g., a temperature of from about 105 °C to about 115 °C. Drying may be conducted over a suitable period of time, for example, up to about 24 hours, for example, from about 8 to 20 hours, or from about 12 to about 20 hours, or from about 12 to about 20 hours, or from about 14 to about 20 hours, or from about 12 to 18 hours, or from about 15 to about 17 hours.

Following preparation of the catalyst precursor, the catalyst precursor is heat treated. Heat treatment may be conducted a temperature of from about 250 °C to about 800 °C, for example, from about 300 °C to about 700°C, or from about 350 °C to about 600°C, or from about 400 °C to about 550 °C, or from about 450 °C to about 550 °C, or from about 475 °C to about 525°C. The salt precursor will be decompose at such temperatures. Heat treatment may be conducted under any suitable type of atmosphere such as, for example, oxygen containing atmosphere or inert atmosphere. In certain embodiments, the heat treatment may be conducted under air, oxygen, nitrogen, argon, or mixtures thereof. Without wishing to be bound by theory, it is believed that the heat treatment leads to the formation of an tin-palladium(II) alloy in a mixed oxide type material and/or palladium(II) oxide which is contact with tin(IV) oxide, may be determined by chemical analysis such as XPS. As such, the heat treatment may be considered as an oxidation step as palladium becomes associated with oxygen. If the tin precursor is a tin(II) species it will also be oxidised to tin(IV) during the first heat treatment step. In certain embodiments, the heat treatment step is a step of calcining the catalyst precursor. The heat treatment (or oxidation step, or calcining step) may be conducted for a period of time ranging from about 30 mins to about 10 hours, for example, from about 1 hour to about 8 hours, or from about 2 hours to about 6 hours, or from about 2 hours to about 5 hours, or from about 2 hours to about 4 hours, or from about 2.5 hours to about 3.5 hours, or about 3 hours.

In certain embodiments, step (ii) comprises or consists of calcining the catalyst precursor at a temperature of from about 450 °C to about 550 °C for a period of from about 2 to about 4 hours.

Following step (ii) of heat treating (e.g., calcining), the heated-treated catalyst (e.g., calcined catalyst) is treated under reducing conditions, forming a reduced catalyst. Following reductive treatment, chemical analysis such as XPS, may indicate the presence of metallic Pd. It has surprisingly been found that treating the heat-treated catalyst under reducing conditions enhances the stability and, thus, re-usability of the catalyst. The reducing treatment, in some embodiments, have the effect of reducing the $H_2O_2$ productivity of the catalyst during direct synthesis. However, any modest decrease in $H_2O_2$ productivity is advantageously off-set by the increased stability and re-usability of the catalyst. Reducing conditions include heat treatment under reducing conditions, chemical reduction and electrodeposition. In certain embodiments, the heat-treated catalyst from step (ii) is heat treated under reducing conditions, for example, a mixture of hydrogen and an inert gas such as argon or nitrogen, and at an elevated temperature of at least about 50 °C and for a period of time of from about 30 minutes to about 10 hours, for example, from about 30 minutes to about 8 hours, or from about 1 hour to about 6 hours, or from about 1 hour to about 4 hours, or from about 1 hour to about 3 hours, or from about 1.5 hours to about 2.5 hours, or about 2 hours. In certain embodiments, the temperature is from about 50 °C to about 350 °C, for example, from about 75°C to about 300°C, or from about 75 °C to about 275 °C, or from about 75 °C to about 250 °C, or from about 100°C to about 300 °C, or from about 150 °C to about 250 °C, or from about 175 °C to about 225 °C.

The mixture of hydrogen and argon may comprise up to about 20 vol. % hydrogen, for example, up to about 15 vol. % hydrogen, or up to about 10 vol. % hydrogen, or up to about 8 vol. % hydrogen, or up to about 6 vol. % hydrogen, or up to about 5 vol. % hydrogen. The mixture may comprise less than 5 vol. % hydrogen.

In certain embodiments, step (iii) comprises or consists of heat treating the heat-treated catalyst from step (ii) under a mixture of hydrogen and argon at a temperature from about 150 °C to about 250 °C for a period of time of from about 1 to about 3 hours. In such an embodiment, the mixture of hydrogen and argon may comprise up to about 10 vol. % hydrogen, for example, up to about 8 vol. % hydrogen, or up to about 6 vol. % hydrogen, or up to about vol. 5 % hydrogen.

Chemical reducing agents are known in the art and may be selected, for example, from NaH, LiH, LiAlH$_4$, NaBH$_t$, KBH$_4$, CaH$_2$, SnCl$_2$, diisobutylaluminium hydride, sodium sitrate, disodium citrate, trisodium citrate, sodium formate, formic acid, hydrazine, methanol, and combinations thereof. Other reducing treatments include, for example, radiolysis in the presence of isopropanol.

Following step (iii), the reduced catalyst is treated under oxidizing conditions. It has surprisingly been found that treating the reduced (and initially heat-treated) catalyst under oxidizing conditions may significantly suppress, or even completely inhibit, hydrogenation activity, without adversely affecting the stability of the catalyst. Without wishing to be bound by theory, it is believed that this further treatment returns the palladium species to 2+ oxidation state, as may be determined by chemical analysis such as XPS. The oxidizing conditions may comprise or consist of heating the reduced catalyst in an oxidizing atmosphere at an elevated temperature. For example, the reduced catalyst may be heated in oxygen, air or an atmosphere comprising higher levels of oxygen relative to air. The temperature is from about 250 °C to about 800 °C, for example, from about 300 °C to about 700°C, or from about 350 °C to about 600°C, or from about 350 °C to about 550 °C, or from about 350 °C to about 500 °C, or from about 350 °C to about 450°C, or from about 375 °C to about 425 °C, or about 400 °C. The heat treatment (or oxidation step, or calcining step) may be conducted for a period of time ranging from about 30 mins to about 10 hours, for example, from about 1 hour to about 8 hours, or from about 2 hours to about 6 hours, or from about 2 hours to about 5 hours, or from about 3 hours to about 5 hours, or from about 3.5 hours to about 4.5 hours, or about 4 hours.

In certain embodiments, step (iv) comprises or consists of heating the reduced catalyst in air at temperature of from about 350 °C to about 450 °C for a period of time of from about 2 hours to about 4 hours or from about 3 hours to about 5 hours. In certain embodiments in which the support is SiO$_2$, the period of time is from about 2 hours to about 4 hours, for example, 2.5 hours to about 3.5 hour, or no more than about 3 hours.. In certain embodiments in which the support is TiO$_2$, the period of time is from about 3 hour to about 5 hours, for example, from about 3.5 hours to about 4.5 hours, or no more than about 4 hours.

In certain embodiments, the catalyst of the first aspect of the invention, and in advantageous embodiments of the catalyst of the section aspect of the invention, the catalyst is obtainable or prepared by a process comprising: (i) simultaneously depositing tin and palladium onto a catalyst support by co-impregnation, forming a catalyst precursor comprising catalyst support, tin and palladium, (ii) heat-treating (e.g., calcining) the catalyst precursor at a temperature of from about 450 °C to about 550 °C for a period of from about 2 hours to about 4 hours, forming a heat-treated (e.g., calcined) catalyst, (iii) treating the heat-treated (e.g., calcined) catalyst of step (ii) under a mixture of hydrogen and argon at a temperature of from about 150 °C to about 250 °C for a period of time of from about 1 hour to about 3 hours, forming a reduced catalyst, and (iv) treating the reduced catalyst of step (iii) under oxidising conditions by heating the reduced catalyst in air at a temperature of from about 350 °C to about 450 °C for a period of time of from about 2 hours to about 4 hours, or from about 3 hours to about 5 hours. In such embodiments, the catalyst support may be SiO$_2$ or TiO$_2$.

As discussed above, the catalyst of the invention may be re-usable without major reduction in H$_2$O$_2$ productivity. This indicates the catalyst is stable. Thus, in certain embodiments, the stability of a catalyst of the invention may be determined by comparing its H$_2$O$_2$ productivity on first use in a direct synthesis reaction and its H$_2$O$_2$ productivity on second use in a direct synthesis reaction (the conditions of the first and second direct synthesis reaction are identical). H$_2$O$_2$ productivity is determined in accordance with the method and calculations described in the Examples below. Thus, in certain embodiments, the catalyst has a stability of at least about 60 %, which is calculated as [(H$_2$O$_2$ productivity on second use)/(H$_2$O$_2$ productivity on first use) x 100]. In certain embodiments, the catalyst has a stability of at least about 70 %, for example, at least about 80 %, or at least about 85 %, or at least about 90 %, or at least about 92 %, or at least about 94 %, or at least about 96 %, or at least about 98 %, or at least about 99 %. In certain embodiments, the catalyst may have a stability of 100 %, indicating no loss in H$_2$O$_2$ productivity between first and second use of the catalyst in a direct synthesis reaction. In such embodiments, the catalyst support may be SiO$_2$ or TiO$_2$.

*Direct synthesis of hydrogen peroxide, $H_2O_2$*

The process of manufacturing hydrogen peroxide by direct synthesis comprises converting hydrogen and oxygen to hydrogen peroxide in the presence of a catalyst of the invention, i.e., a catalyst according to the first and second aspects of the invention. The catalyst is heterogeneous. It has been surprisingly found that reacting hydrogen and oxygen in the presence of a catalyst of the invention comprising tin and one or more of palladium, platinum and nickel, enables the preparation of hydrogen peroxide with an increased productivity and/or suppressed hydrogenation activity and/or increased selectivity to hydrogen peroxide. Indeed, in certain embodiments, for example, embodiments in which the catalyst is prepared in accordance with the first aspect of the invention, it is possible to suppress or even completely inhibit hydrogenation.

The direct synthesis process may be conducted in any type of suitable reactor known in the art, for example, a stirred reactor, such as an autoclave equipped with stirring means, a loop reactor or a tube reactor. The process may be conducted batchwise, continuously or semi-continuously. The catalyst may be in the reactor as a fixed bed or fluidized bed.

In certain embodiments, the direct synthesis process is conducted at a temperature of from about -20 °C to about 100 °C, for example, from about -10 °C, to about 80 °C, or from about -5 °C to about 50 °C, or from about -2 °C to about 25 °C, or from about -1 °C to about 10 °C, or from about 0 °C to about 10°C, or from about 1 °C to about 10 °C, or from about 1 °C to about 5 °C, or from about 1 °C to about 3 °C, or at a temperature of about 0°C, or about 1 °C, or about 2 °C, or about 3 °C, or about 4 °C.

In certain embodiments, the process is conducted in a liquid medium, for example, an aqueous liquid medium. The aqueous medium may comprise a water-miscible solvent including, for example, methanol, ethanol, isopropyl alcohol, acetone and glycols such as ethylene glycol, propylene glycol, diethylene glycol and dipropylene glycol, and mixtures thereof. In certain embodiments, the liquid medium is aqueous methanol. In certain embodiments, the weight ratio of water-miscible solvent to water is from about 10:1 to about 1:10, for example, from about 8:1 to about 1:8, or from about 5:1 to about 1:5, or from about 4:1 to about 1:4, or from about 4:1 to about 1:2, or from about 4:1 to about 1:1, or from about 3:1 to about 1:1, or from about 2:1 to about 1:1.

The total pressure in the reactor (measured at 20 °C) may vary according to the reaction conditions, amounts of starting materials and the type of reactor. In certain embodiments, the total pressure in the reactor is from about 0.1 to about 15 MPa, for example, from about 0.5 to about 10 MPa, or from about 1 to about 8 MPa, or from about 2 to about 6 MPa, or from about 3 to about 5 MPa, or from about 3.5 to about 4.5 MPa, or about 4 MPa.

The reaction time may vary according to the reaction conditions and amounts of starting materials and may be adjusted accordingly. In certain embodiments, the reaction time is from about 30 seconds to about 10 hours, for example, from about 1 minute to about 5 hours, or from about 5 minutes to 300 minutes, or from about 10 minutes to about 240 minutes, or form about 10 minutes to about 180 minutes, or from about 15 minutes to about 120 minutes, or from about 15 minutes to about 90 minutes, or from about 15 minutes to about 60 minutes, or from about 15 minutes to about 45 minutes, or from about 20 minutes to about 60 minutes, or from about 25 minutes to about 50 minutes, or from about 25 minutes to about 40 minutes.

In certain embodiments, the reaction medium additionally comprises other components which further enhance the direct synthesis process. For example, The addition of halides and acids to the reaction may used to suppress the competing hydrogenation and decomposition reactions leading to improved yields of $H_2O_2$. For example, bromide ions, e.g., in the form of hydrogen bromide, may be added to reduce the tendency for $H_2O$ formation at higher temperatures. Additionally or alternatively, inorganic acid may be added to stabilize the hydrogen peroxide formed. Exemplary inorganic acids are sulphuric acid, nitric acid, hydrochloric acid and ortho-phosphoric acid. However, owing to advantageous properties, as described herein, of the catalysts of the invention, in certain advantageous embodiments, the process of manufacturing hydrogen peroxide by direct synthesis is conducted in the absence of halide and/or acid stabilizers.

In other embodiments, the catalyst of the invention may also be used for the synthesis of hydrogen peroxide by indirect methods, such as by the anthraquinone process.

Embodiments of the present invention will now be described by way of illustration only, with reference to the following examples.

## EXAMPLES

*Catalyst preparation*

In the following examples, unless stated otherwise, tin and palladium monometallic and bimetallic catalysts were prepared by impregnating or co-impregnating aqueous solutions of metal salts onto the appropriate catalyst support which included $TiO_2$ and $SiO_2$. The catalysts prepared had a nominal total metal loading of 5 wt% unless otherwise stated. A typical preparation for 1 g of 2.5 % Pd / 2.5% Sn / $TiO_2$ was carried out as follows: 0.063 g $Pd(NO_3)_2.2H_2O$

8

was first dissolved in 2 ml of de-ionised water and heated to 80 $\degree$C with stirring. 0.074 g of SnCl$_4$.5H$_2$O was dissolved in a minimal amount of water and added to the aqueous palladium solution and left for 15 min. 0.95 g of the support was then added to the solution and the water allowed to evaporate until the mixture had formed a paste like consistency. Samples were then dried at 110 $\degree$C for 16 h and calcined in static air at various temperatures for 3 h with a ramp rate of 20 $\degree$C min$^{-1}$.

Unless stated otherwise, gold and palladium bimetallic catalysts were prepared by co-impregnating the appropriate catalyst support with solutions of PdCl$_2$ and HAuCl$_4$. The catalysts contained a nominal metal content of 5 wt% unless otherwise stated. A typical preparation for 1 g of 2.5% Pd / 2.5% Au / TiO$_2$ was carried out according to the following procedure: 0.042 g of PdCl$_2$ was added to 2.04 ml of HAuCl$_4$ (12.25 g Au / 1000 ml) and heated to 80 °C with stirring and left until the PdCl$_2$ had completely dissolved. 0.95 g of the desired support was then added to the solution and the water allowed to evaporate until the mixture formed a paste like consistency. The samples were dried at 110 $\degree$C for 16 h and then calcined in static air at various temperatures, typically 400 $\degree$C for 3 h with a ramp rate of 20 $\degree$C min$^{-1}$.

*Catalyst testing*

*- H$_2$O$_2$ synthesis in a batch system*

The performance of each catalyst for the direct synthesis of H$_2$O$_2$ from H$_2$ and O$_2$ was determined using a Parr Instruments stainless-steel autoclave (equipped with an overhead stirrer and temperature/pressure sensors) with a nominal volume of 100 ml and a maximum working pressure of 14 MPa. During a standard synthesis test the autoclave was charged with 5.6 g of MeOH, 2.9 g of HPLC grade H$_2$O and 10 mg of catalyst. The autoclave was pressurised with 2.9 MPa 5% H$_2$/CO$_2$ and 1.1 MPa 25% O$_2$/CO$_2$ to give a total reaction pressure of 4 MPa. The autoclave was cooled to 2 °C and then stirred at 1200 rpm for 30 min. After the reaction was complete the solvents were filtered from the catalyst and 0.25 g aliquots of the solvent were titrated against a diluted Ce(SO$_4$)$_2$ solution acidified with 2% H$_2$SO$_4$ using ferroin as an indicator. The exact concentration of the Ce(SO$_4$)$_2$ solution was determined by titration of a known amount of (NH$_4$)$_2$Fe(SO$_4$)$_2$.6H$_2$O again using ferroin as an indicator.

To compare the performance of the catalysts over the 30 min reaction the average rate of H$_2$O$_2$ production was calculated and normalised to catalyst mass to give a productivity value which is presented as mol$_{H2O2}$ h$^{-1}$ kg$_{cat}$$^{-1}$. The wt % of H$_2$O$_2$ was also determined for each reaction using the following calculations:

$$\text{Volume Ce(SO}_4)_2 \text{ to titrate whole reaction solution} = \frac{\text{Titre x 8.5}}{\text{Sample mass}} \quad (2.1)$$

$$\text{Moles Ce(SO}_4)_2 = \frac{\text{Vol. Ce(SO}_4)_2 \text{ to titrate reaction solution x [Ce(SO}_4)_2]}{1000} \quad (2.2)$$

$$\text{Moles H}_2\text{O}_2 = \frac{\text{Moles Ce(SO}_4)_2}{2} \quad (2.3)$$

$$\text{Productivity} = \frac{\text{Mol H}_2\text{O}_2}{\text{Catalyst mass (kg) x Reaction Time (h)}} \quad (2.4)$$

$$\text{wt% H}_2\text{O}_2 = \frac{\text{Moles H}_2\text{O2 x Mr H}_2\text{O}_2}{8.5} \quad (2.5)$$

*- H$_2$O$_2$ hydrogenation in a batch system*

The hydrogenation activity of a catalyst was tested in a similar way to the direct synthesis activity. The autoclave was charged with 5.6 g of MeOH, 0.67 g 50 wt% H$_2$O$_2$ and 223 g of HPLC grade H$_2$O and thoroughly mixed, after which 10 mg of catalyst was added. This solvent composition is equivalent of a 4 wt% H$_2$O$_2$ solution of the same volume used previously in the H$_2$O$_2$ synthesis experiments. 2 drops of the solvent solution each weighing around 0.04 g were removed and titrated with the acidified Ce(SO$_4$)$_2$ solution using ferroin as an indicator to determine accurately the initial H$_2$O$_2$ concentration. The autoclave was pressurised with 2.9 MPa 5% H$_2$/CO$_2$ and cooled to 2 °C and the reaction was carried out for 30 min at 1200 rpm stirring speed. After the reaction was complete the solvents were filtered from the catalyst and two ~0.04 g aliquots of the solvent were titrated against an acidified dilute $Ce(SO_4)_2$ solution using ferroin as an indicator. The hydrogenation activity was calculated as $mol_{H2O2}$ $h^{-1}$ $kg_{cat}^{-1}$ along with the percentage of the initial $H_2O_2$ which was present at the end of the reaction.

*- Catalyst re-use in a batch system*

Catalyst reusability was tested by running a synthesis reaction as outlined above but increasing the amount of catalyst to 70 mg. After the reaction was complete the solvent was filtered from the catalyst, and the catalyst was allowed to dry overnight on the filter paper. Before being retested the catalyst was dried at 110 °C in an oven for 1 hour to ensure the sample was completely dry. Following this procedure a synthesis reaction was run as described above.

*Catalyst characterisation*

*- Temperature Programmed Reduction*

Temperature programmed reduction (TPR) is a thermal analysis technique that allows $H_2$ consumption to be measured while the sample undergoes a heating profile therefore indicating the temperatures at which the sample consumes $H_2$ and has been used extensively to study catalytic systems. During a temperature programmed reduction the sample is heated under a flow of $H_2$ containing gas and $H_2$ consumption by the sample can be monitored using a TCD to analyse the gas that has passed through the sample cell. A plot of TCD signal against temperature can indicate at which temperature the sample undergoes reduction. A positive peak in the TCD signal indicates $H^2$ consumption. TPR can give an indication as to what temperature a sample needs to be reduced at to generate the desired species on a catalyst and can also give an indication of the initial species present on the catalyst.

TPR profiles were recorded using a Thermo 1100 series TPDRO. 0.1 g of sample was packed into the sample tube between quartz wool. Argon (15 ml min-1) was then passed through the system while it was heated from room temperature to 110 °C at 5 °C $min^{-1}$, where it was held for 60 min. The sample was allowed to cool to room temperature and following this the gas was switched to 10% $H_2$ / Ar (15 ml $min^{-1}$) and the sample was heated at 5 °C $min^{-1}$ up to 800 °C. The profile was recorded using a TCD with positive polarity.

*- X-ray diffraction*

Investigation of the bulk structure of the catalytic materials was carried out using a $(\theta-\theta)$ PANalytical X'pert Pro powder diffractometer using a Cu K$\alpha$ radiation source operating at 40 KeV and 40 mA. Standard analysis was performed using a 40 min scan between $2\theta$ values of 10-80° with the samples supported on an amorphous silicon wafer. Diffraction patterns of phases were identified using the ICDD data base.

An extension of standard XRD is *in-situ* XRD which allows the study of the bulk phase to be monitored continuously as the sample is heated, pressurised or exposed to reaction conditions or a pressure of gas. Investigation of the bulk properties of the catalysts was carried out while increasing the temperature of the sample to mimic calcination conditions. An X'pert Pro XRD fitted with an Anton-Parr XRK900 *in-situ* cell (internal volume of 0.5 L) was used with XRD.

*- X-ray Photoelectron Spectroscopy*

X-ray photoelectron spectroscopy (XPS) is a characterisation technique which can give information such as composition and oxidation state of species on the surface of the catalyst to a depth of around 10 nm. XPS was performed using a VG EscaLab 220i spectrometer, using a standard Al-K$\alpha$ X-ray source (300 W) and an analyser pass energy of 20 eV. Samples were mounted using double-sided adhesive tape, and binding energies were referenced to the C 1s binding energy of adventitious carbon contamination, which was taken to be 284.7 eV.

*Example 1*

A series of monometallic and bimetallic catalysts were prepared by impregnation using both $SiO_2$ and $TiO_2$ as support in accordance with the preparative methods described above. The composition of each catalyst is shown in Table 1 along with $H_2O_2$ productivity

**Table 1.**

| Catalyst | $H_2O_2$ productivity $(mol_{H2O2} h^{-1} kg_{cat}^{-1})$ $TiO_2$ | $H_2O_2$ productivity $(mol_{H2O2} h^{-1} kg_{cat}^{-1})$ $SiO_2$ |
|---|---|---|
| 5 % Pd | 41 | 12 |
| 5%Sn | 18 | 7 |
| 2.5 % Pd / 2.5 % Sn | 62 | 40 |
| 2.5 % Pd | 20 | 8 |
| 2.5 % Sn | 6 | 5 |

Comparing the sum of the $H_2O_2$ productivity of the supported monometallic 2.5 wt% Pd, 2.5 wt% Sn with the bimetallic 2.5 wt% Pd / 2.5 wt% Sn catalysts, a clear synergistic effect between Pd and Sn when supported on both $TiO_2$ and $SiO_2$ is observed.

### Example 2

A series of catalyst were prepared on $SiO_2$ and $TiO_2$ containing a total nominal content of 5 wt. % with varying Sn and Pd contents. A comparative catalyst comprising 5 wt. % Pd only was also prepared. A $H_2O_2$ hydrogenation test was carried out on each catalyst. The composition of the catalysts and $H_2O_2$ hydrogenation test results are summarized in Table 2.

The results show that irrespective of the Pd : Sn ratio, all Pd-Sn bimetallic $TiO_2$ or $SiO_2$ supported catalysts were less active for $H_2O_2$ hydrogenation/decomposition than the corresponding Pd monometallic catalysts.

**Table 2.**

| Catalyst | $H_2O_2$ hydrogenation rate $(mol_{H2O2} h^{-1} kg_{cat}^{-1})$ $TiO_2$ | $H_2O_2$ hydrogenation rate $(mol_{H2O2} h^{-1} kg_{cat}^{-1})$ $SiO_2$ |
|---|---|---|
| 5 % Pd | 126 | 113 |
| 4%Pd/1 % Sn | 83 | 75 |
| 3 % Pd / 2 % Sn | 65 | 50 |
| 2.5 % Pd / 2.5 % Sn | 41 | 53 |
| 2 % Pd / 3 % Sn | 12 | 60 |
| 1 % Pd / 4 % Sn | 65 | 66 |

### Example 3a

The 1st and 2nd use productivity of the 1 % Pd / 4 % Sn / $SiO_2$ catalyst from Example 2 was determined. The catalyst was subjected to a reductive treatment at 200 °C for 2 hours under 5 % H2/Ar and its 1st and 2nd use productivity was determined along with hydrogenation activity. The catalyst was subsequently subjected to a heat treatment by calcination in air at 400 °C for 3 hours. Results are summarized in Table 3.

It is seen that the reductive treatment improves 2nd use $H_2O_2$ productivity, but leads to an increase in $H_2O_2$ hydrogenation activity. The further heat treatment provides a stable catalyst and completely inhibits hydrogenation activity.

**Table 3.**

| Heat treatment | 1st use $H_2O_2$ productivity $(mol_{H2O2} h^{-1} kg_{cat}^{-1})$ | 2nd use $H_2O_2$ productivity $(mol_{H2O2} h^{-1} kg_{cat}^{-1})$ | $H_2O_2$ hydrogenated $(mol_{H2O2} h^{-1} kg_{cat}^{-1})$ |
|---|---|---|---|
| 500 °C / 3 h / air | 66 | 22 | 66 (2 %) |
| 500 °C / 3 h / air + reduced 200 °C / 2 h | 76 | 76 | 340 (10 %) |

(continued)

| Heat treatment | 1st use H$_2$O$_2$ productivity (mol$_{H2O2}$ h$^{-1}$ kg$_{cat}$$^{-1}$) | 2nd use H$_2$O$_2$ productivity (mol$_{H2O2}$ h$^{-1}$ kg$_{cat}$$^{-1}$) | H$_2$O$_2$ hydrogenated (mol$_{H2O2}$ h$^{-1}$ kg$_{cat}$$^{-1}$) |
|---|---|---|---|
| 500 °C / 3 h / air + reduced 200 °C / 2 h + 400 °C / 3 h / air | 50 | 50 | 0 |

_Example 3b_

The 1st and 2nd use productivity of the 3 % Pd / 2 % Sn / TiO$_2$ catalyst from Example 2 was determined. The catalyst was subjected to a reductive treatment at 200 °C for 2 hours under 5 % H$_2$/Ar and its 1st and 2nd use productivity was determined along with hydrogenation activity. The catalyst was subsequently subjected to a heat treatment by calcination in air at 400 °C for 3 or 4 hours. Results are summarized in Table 4.

It is seen that the reductive treatment improves 2nd use H$_2$O$_2$ productivity, but leads to an increase in H$_2$O$_2$ hydrogenation activity. The further heat treatment provides a stable catalyst and significantly suppresses (3 hour treatment) or completely inhibits (4 hour treatment) hydrogenation activity.

**Table 4.**

| Heat treatment | 1st use H$_2$O$_2$ productivity (mol$_{H2O2}$ h$^{-1}$ kg$_{cat}$$^{-1}$) | 2nd use H$_2$O$_2$ productivity (mol$_{H2O2}$ h$^{-1}$ kg$_{cat}$$^{-1}$) | H$_2$O$_2$ hydrogenated (mol$_{H2O2}$ h$^{-1}$ kg$_{cat}$$^{-1}$) (% H$_2$O$_2$ hydrogenated) |
|---|---|---|---|
| 500 °C / 3 h / air | 68 | 14 | 65 (2 %) |
| 500 °C / 3 h / air + reduced 200 °C / 2 h | 60 | 58 | 292 (8.5 %) |
| 500 °C / 3 h / air + reduced 200 °C / 2 h + 400 °C / 3 h / air | 59 | 60 | 34 (1%) |
| 500 °C / 3 h / air + reduced 200 °C / 2 h + 400 °C / 4 h / air | 61 | 60 | 15 (0.5%) |

_Example 4_

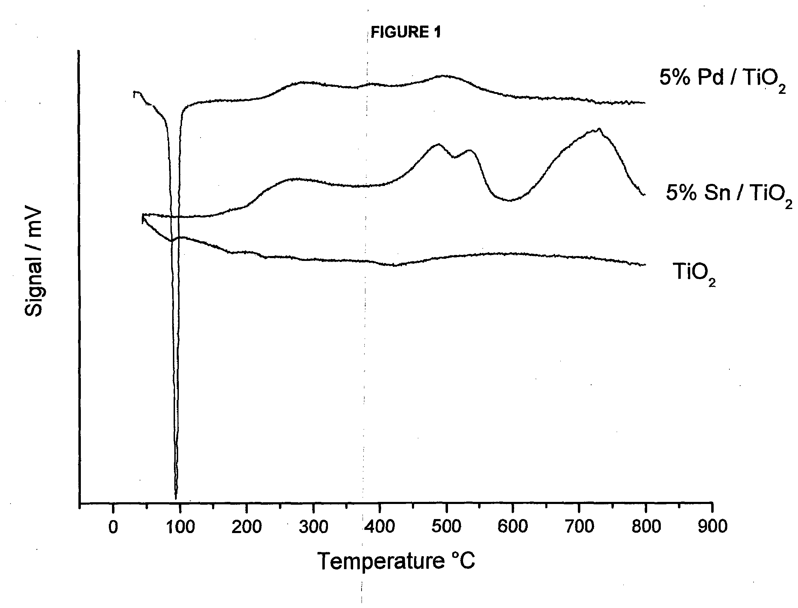

Temperature programmed reduction (TPR) of a series of catalysts was carried out following calcination at 500 °C for 3 hours. Figure 1 shows the TPR profiles of monometallic Sn and Pd catalysts supported on TiO$_2$ and also the bare TiO$_2$ support after identical calcination treatment at 500°C for 3 hours. In the TPR profile of monometallic 5 % Pd / TiO$_2$ the large negative response can be attributed to the evolution of hydrogen from the sample resulting from the decomposition of palladium-β-hydride.

Figure 2 shows the TPR profile of various bimetallic catalysts supported on TiO$_2$. All catalysts show a response at 90 °C; however the intensity of this signal is decreased considerably relative to the monometallic Pd catalyst. Without wishing to be bound by theory, this observation may either suggest that the presence of Sn inhibits the formation of palladium-β-hydride or that Pd is present in a different form, such as a Pd-Sn alloy. Further, the TPR profiles of the bimetallic catalysts show a new unique feature at _ca._ 150 °C. This feature is not present in the TPR profiles of the monometallic catalysts and coincides with the decrease in the intensity of the palladium-β-hydride signal. Again, without wishing to be bound by theory, these observations may suggest that the unique TPR feature at 150 °C present in the TiO$_2$-based Pd-Sn bimetallic catalysts could be related to a mixed Pd-Sn species, for example, a Pd-Sn alloy phase which may be active for the direct synthesis of H$_2$O$_2$.

_Example 5_

X-ray diffraction patterns were obtained for selected Sn-Pd bimetallic catalysts supported on SiO$_2$ and TiO$_2$.

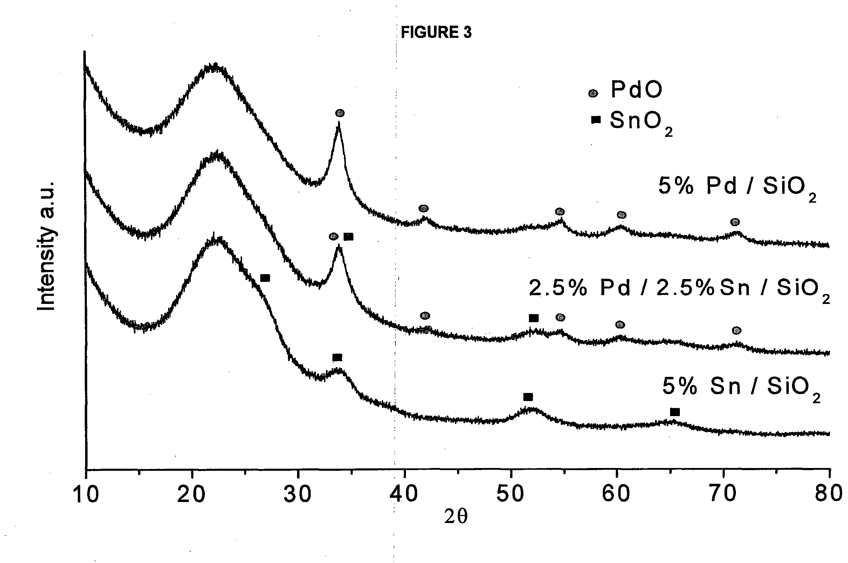

Figure 3 shows XRD of the monometallic 5% Pd, 5% Sn and bimetallic 2.5% Pd 2.5% Sn supported on silica after calcination at 500 °C for 3 hours. The 5% Pd and 5% Sn materials both show a broad reflection at 22° from the poorly crystalline silica support. The monometallic Pd and Sn catalysts both show reflections characteristic of the PdO and $SnO_2$ phases respectively. The bimetallic catalyst shows weak features of both PdO and $SnO_2$.

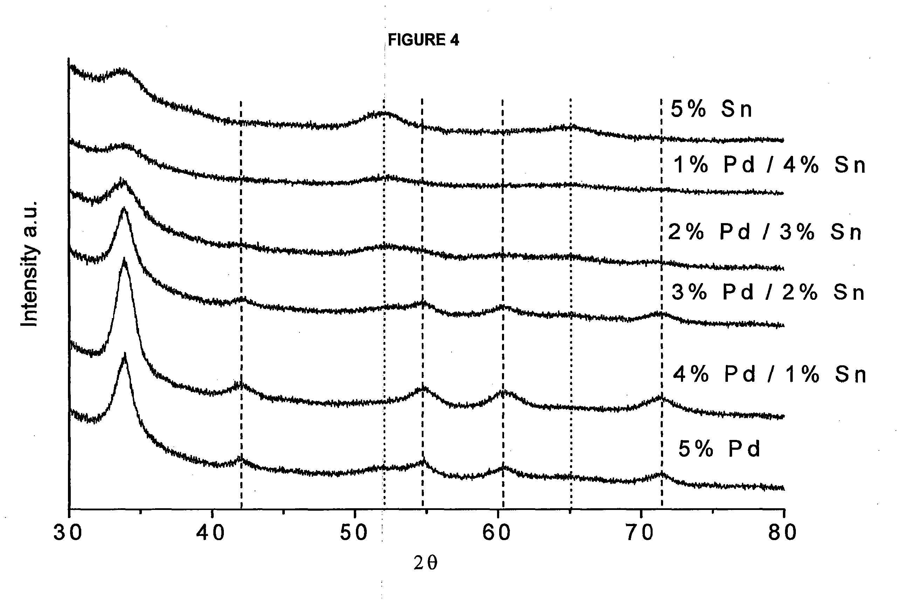

Figure 4 illustrates how the XRD pattern varies when the Sn:Pd ratio is varied. PdO features are indicated by the dashed line and as the Pd content is decreased from 5% the features become less intense. The same can be seen with the $SnO_2$ reflections indicated by the dotted lines. The reflection at 34° is a combination of both $SnO_2$ and PdO reflections.

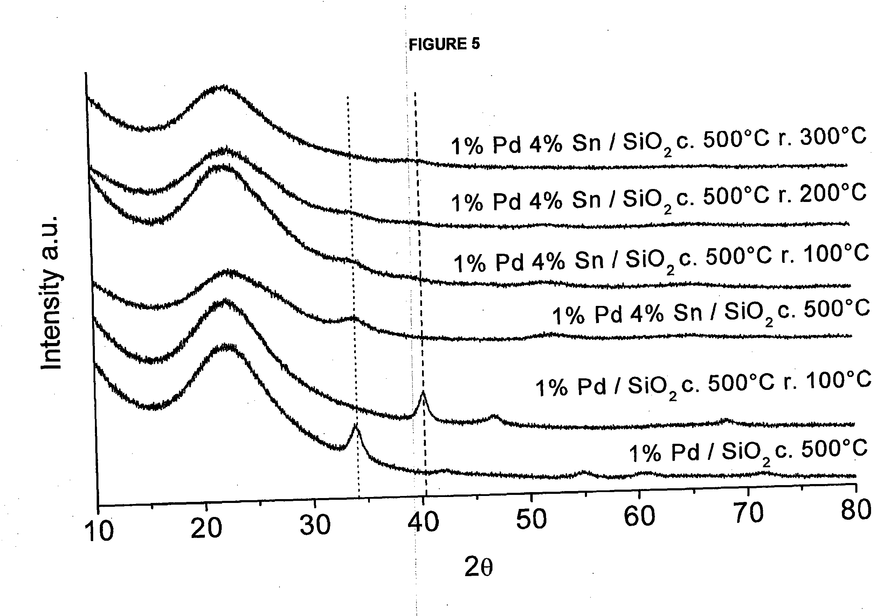

To check that the absence of PdO peaks in the XRD pattern was not due to the Pd being below the detection limits of the technique, standard samples were prepared with 1% Pd and calcined at 500 °C for 3 hours, identical to that employed for the catalyst containing 1% Pd / 4% Sn / $SiO_2$. The XRD patterns are shown in Figure 5. The catalysts containing 1% Pd with no Sn clearly show PdO reflections at 34. After reduction at 100 °C, the catalyst clearly showed reflections of Pd metal with similar particle sizes. These features are not present in the catalyst containing 1% Pd / 4% Sn either after calcination or calcination and subsequent reduction at 100-300 °C. Without wishing to be bound by theory, this may imply that Sn enhances the dispersion of Pd in the bimetallic catalysts or the Pd is incorporated into the Sn as an alloy, especially in the lower Pd content catalysts. After subsequent calcination after reduction of the catalyst no discernable features could be detected above the $SiO_2$ diffraction patterns indicating that the metals are in a highly dispersed state.

XRD patterns (not shown) were recorded for the equivalent $TiO_2$ samples. No reflections corresponding to Sn or Pd could be seen over the intense peaks of the $TiO_2$ used as the support material for the catalyst.

*Example 6*

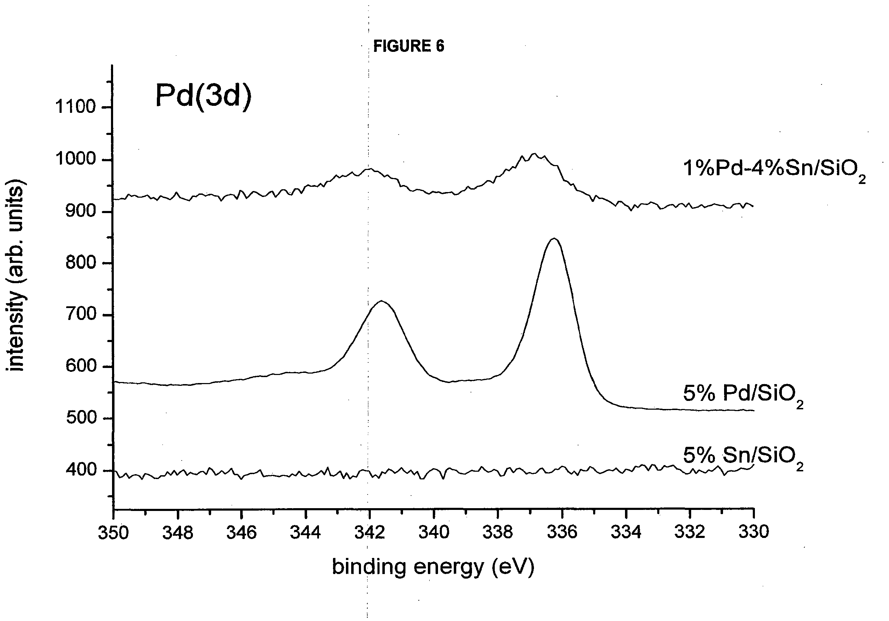

XPS spectra were recorded for the various catalysts supported on $SiO_2$ after various heat treatments and also for monometallic catalysts. Figure 6 shows the Pd(3d) XPS spectra of monometallic and bimetallic catalysts after calcination at 500 oC for 3 hours. The monometallic Pd sample shows peaks indicating the Pd is present in the 2+ oxidation state which agrees with the observation of PdO in the XRD analysis. The Pd(3d) XPS spectra of the bimetallic catalysts shows a shift to higher binding energy relative to the monometallic catalysts which indicates that the Pd is in a more oxidised state, possibly indicating electron transfer from Pd to Sn.

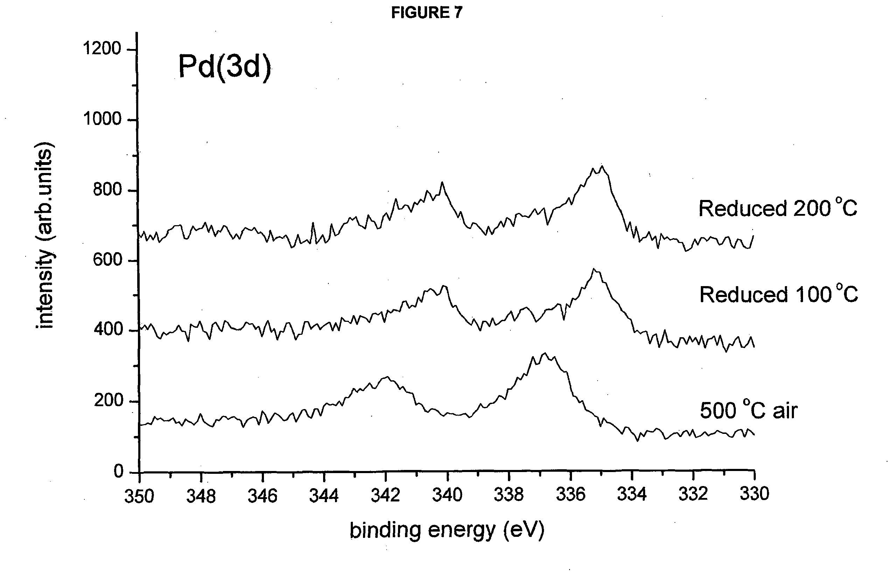

Figure 7 shows the Pd(3d) XPS spectra for the of 1% Pd / 4% Sn / $SiO_2$ catalyst after calcination at 500 oC for 3 hours and subsequent reduction at various temperatures for 2 h under 5% $H_2$/ Ar. A clear shift from Pd(II) to metallic Pd can be seen after reduction at 100 °C and remains unchanged during reduction upto 200 °C.

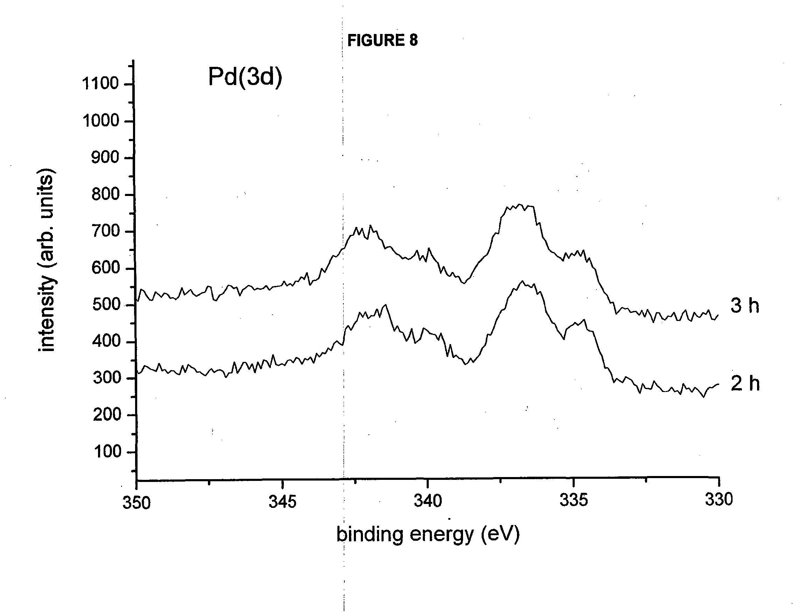

Figure 8 shows the Pd(3d) spectra of the reduced 1% Pd / 4% Sn / $SiO_2$ after subsequent heat treatment at 400 °C in air for 2 hours and 3 hours. The spectra show that on heating under air at high temperatures for various times the Pd returns to the Pd(II) oxidation state and the Pd(0) species begins to disappear; after 3 h the catalyst predominantly contains Pd(II). Without wishing to be bound by theory, the observation that after a reduction and oxidation following calcination switches off the hydrogenation activity may indicate a change in particle morphology or surface composition as the catalyst is substantially returned to its starting state in terms of oxidation state.

*Example 7 - comparative catalysts*

A bimetallic catalyst comprising 0.5 % Pd and 15 % Sn (total nominal metal = 15.5 wt. %) was prepared based on the method described in Example 3 or US-A-537840. The obtained powder was subjected to various heat treatments: (i) calcination at 500 °C in air for 3 hours followed by reductive treatment at 200°C for 2 hours in 5 % $H_2$/Argon; and (ii) calcination at 500 °C in air for 3 hours, followed by reductive treatment at 200 °C for 2 hours in 5 % $H_2$/Argon, followed by heat treatment at 400 °C for 4 hours in air. The heat treated catalysts were tested in a direct synthesis reaction in accordance with the method described above. 1st use productivity, 2nd use productivity and hydrogenation activity was determined for each catalyst. In fact, it was not possible to determine 2nd use productivity data for the this catalyst as it was not recoverable following use in the first direct synthesis reaction. It is noted in this respect that the hydrogen peroxide reaction described in Example 3 of US-A-537840 for this catalyst required the addition of an sulphuric acid and so it appears this catalyst requires an acid stabilizer.

A 2.5% Pd / 2.5% Au / $TiO_2$ catalyst was prepared in accordance with the method described above. The catalyst precursor was subjected to the same heat treatments (i) and (ii) described above, save that in each case the first calcination was carried out at 400°C, and tested for 1st use productivity, 2nd use productivity and hydrogenation activity.

The results are summarized in Table 5 below, together with results for various bimetallic catalyst of the invention.

**Table 5.**

| Heat treatment | 500°C / 3 hours / air + 200 °C / 2 hours / $H_2$ | | | 500 °C / 3 hours / air + 200 °C / 2 hours / $H_2$ + 400 °C / 4 hours / air | | |
|---|---|---|---|---|---|---|
| Catalyst | Productivity Mol/$kg_{cat}^{-1}$/$h^{-1}$ | Hydrogenation Mol/$kg_{cat}^{-1}$/$h^{-1}$ | Productivity on 2nd Use Mol/$kg_{cat}^{-1}$/$h^{-1}$ | Productivity Mol/$kg_{cat}^{-1}$/$h^{-1}$ | Hydrogenation Mol/$kg_{cat}^{-1}$/$h^{-1}$ | Productivity on 2nd Use Mol/$kg_{cat}^{-1}$/$h^{-1}$ |
| 2% Sn / 3% Pd / $TiO_2$ | 61 | 300 (16%) | 60 | 60 | 15 (0.5%) | 60 |
| 2.5% Au / 2.5% Pd / $TiO_2$ | 135 | 396(20%) | 42 | 82 | 277 (14%) | 30 |
| 1% Pd / 4% Sn / $SiO_2$ | 78 | 288 (13%) | 78 | 50 | 0 | 50 |
| 0.5% Pd / 15% Sn / $SiO_2$ | 35 | 373 (18%) | n.d. | 17 | 124 (6%) | n.d. |

**Claims**

1. A catalyst suitable for direct synthesis of hydrogen peroxide, said catalyst comprising catalyst support, tin and one or more of palladium, platinum and nickel, wherein said catalyst is obtainable by a process comprising: (i) preparing, providing or obtaining a catalyst precursor comprising said catalyst support, tin and one or more of palladium, platinum and nickel (ii) heating the catalyst precursor in a first step, forming a heat-treated catalyst, (iii) treating the heat-treated catalyst of step (ii) under reducing conditions, forming a reduced catalyst, and (iv) treating the reduced catalyst of step (iii) under oxidising conditions, wherein the oxidising conditions comprise heating the reduced catalyst in an oxidizing atmosphere at an elevated temperature, wherein the elevated temperature is from 250 °C to 800 °C.

2. The catalyst according to claim 1, wherein the catalyst precursor is prepared by co-impregnation of tin and one or more of palladium, platinum in the catalyst support.

3. The catalyst according to any preceding claim, wherein steps (ii) and/or (iv) comprise heat-treating the catalyst precursor and/or reduced catalyst at a temperature of from 250°C to 600°C; and/or
   wherein step (iii) is carried out in a reducing atmosphere at a temperature of from 100°C to 300°C.

4. The catalyst according to any preceding claim, wherein the combined amount of tin and one or more of palladium, platinum and nickel is less than 15 wt. % of the catalyst, and wherein the catalyst comprises at least 0.25 wt. % of one or more of palladium, platinum and nickel.

5. A catalyst suitable for direct synthesis of hydrogen peroxide, wherein said catalyst is a bimetallic catalyst comprising catalyst support, tin and palladium, wherein the catalyst comprises from 1.0 wt.% to 6 wt. % tin and from 0.5 wt. % to 3.5 wt. % palladium, based on the total weight of the catalyst.

6. The catalyst according to claim 4, wherein the catalyst is a bimetallic catalyst comprising tin and palladium, and wherein the catalyst comprises at least 0.25 wt. % palladium, based on the total weight of the catalyst, optionally wherein the catalyst comprises from 0.5 wt.% to 12 wt. % tin and from 0.25 wt. % to 6 wt. % palladium.

7. The catalyst according to any preceding claim, wherein the catalyst support is an organic or inorganic support, for example, catalyst support selected from the group consisting of carbon supports, oxide supports and silicate supports, for example, from $SiO_2$, $TiO_2$, $Al_2O_3$, $CeO_2$, $Nb_2O_5$, $ZrO_2$, $W_2O_3$, $Fe_2O_3$, silica-alumina, molecular sieves and zeolites, and mixtures thereof, or optionally wherein the catalyst support is an acidic catalyst support.

8. The catalyst according to claim 7, wherein the support (i) comprises or is $SiO_2$, or (ii) comprises or is $TiO_2$, or (iii) is a mixture of $SiO_2$ and $TiO_2$.

9. The catalyst according to claim 8, wherein the support comprises or is $TiO_2$, and the catalyst has (i) a TPR profile, as determined in accordance with the method described in the description, **characterised by** the presence of a positive peak between 140°C and 200°C; or
   wherein the support comprises or is $SiO_2$, and the catalyst a powder X-ray diffraction pattern, as determined in accordance with the method described in the description, **characterised by** the absence of any discernible peaks ($2\theta$) attributable to Pd-containing or Sn-containing species above the $SiO_2$ support diffraction pattern, for example, the absence of any discernible peak at $34°\pm0.5$ $2\theta$ attributable to Pd-containing or Sn-containing species.

10. A process for manufacturing a catalyst according to any one of claims 1-9, comprising (i) depositing tin and one or more of palladium, platinum and nickel precursors onto a catalyst support to form a catalyst precursor, (ii) oxidizing the catalyst precursor in a first oxidation step to form an oxidised catalyst, (iii) reducing the oxidised catalyst to form a reduced catalyst and (iv) oxidizing the reduced catalyst in a second oxidising step, wherein the temperature of the second oxidising step is from 250 °C to 800 °C.

11. The process of claim 10, wherein the tin and one or more of palladium, platinum and nickel are deposited simultaneously or sequentially, preferably simultaneously, for example, by co-impregnation and/or
    wherein the tin and one or more of the palladium, platinum and nickel precursors are aqueous salt precursors, for example, tin chloride and palladium nitrate, and the catalyst precursor is dried prior to the first oxidizing step; and/or
    wherein the process is conducted in accordance with the process defined in claim 3.

12. Use of a catalyst according to any one of claims 1-9 or obtainable by the process of claims 10 or 11 for the direct synthesis of hydrogen peroxide.

13. A process of manufacturing hydrogen peroxide by direct synthesis, said process comprising converting hydrogen and oxygen to hydrogen peroxide in the presence of a catalyst according to any one of claims 1-9.

14. The process of claim 13, which is conducted in a liquid medium, for example, an aqueous liquid medium comprising water, optionally wherein the aqueous liquid medium comprises water and water-miscible solvent, optionally wherein the aqueous liquid medium is aqueous methanol; and/or
wherein the temperature is from 1°C to 50°C, optionally wherein the pressure is from 1 MPa to 8 MPa; and/or
wherein the process is conducted in the absence of acid and/or halide stabilizers.

**Patentansprüche**

1. Katalysator, der für eine direkte Synthese von Wasserstoffperoxid geeignet ist, der Katalysator umfassend einen Katalysatorträger, Zinn und eines oder mehrere von Palladium, Platin und Nickel, wobei der Katalysator durch ein Verfahren erlangt werden kann, das Folgendes umfasst: (i) Herstellen, Bereitstellen oder Erlangen eines Katalysatorvorläufers, umfassend den Katalysatorträger, Zinn und eines oder mehrere von Palladium, Platin und Nickel, (ii) Erhitzen des Katalysatorvorläufers in einem ersten Schritt zum Bilden eines wärmebehandelten Katalysators, (iii) Behandeln des wärmebehandelten Katalysators von Schritt (ii) unter reduzierenden Bedingungen zum Bilden eines reduzierten Katalysators und (iv) Behandeln des reduzierten Katalysators von Schritt (iii) unter oxidierenden Bedingungen, wobei die oxidierenden Bedingungen ein Erhitzen des reduzierten Katalysators in einer oxidierenden Atmosphäre bei einer erhöhten Temperatur umfassen, wobei die erhöhte Temperatur 250 °C bis 800 °C ist.

2. Katalysator gemäß Anspruch 1, wobei der Katalysatorvorläufer durch Co-Imprägnierung von Zinn und einem oder mehreren von Palladium, Platin im Katalysatorträger hergestellt wird.

3. Katalysator gemäß einem der vorherigen Ansprüche, wobei die Schritte (ii) und/oder (iv) eine Wärmebehandlung des Katalysatorvorläufers und/oder des reduzierten Katalysators bei einer Temperatur von 250 °C bis 600 °C umfassen; und/oder
wobei Schritt (iii) in einer reduzierenden Atmosphäre bei einer Temperatur von 100 °C bis 300 °C durchgeführt wird.

4. Katalysator gemäß einem der vorherigen Ansprüche, wobei die kombinierte Menge an Zinn und einem oder mehreren von Palladium, Platin und Nickel weniger als 15 Gewichtsprozent des Katalysators ist, und wobei der Katalysator mindestens 0,25 Gewichtsprozent eines oder mehrerer von Palladium, Platin und Nickel umfasst.

5. Katalysator, der für eine direkte Synthese von Wasserstoffperoxid geeignet ist, wobei der Katalysator ein Bimetallkatalysator ist, umfassend Katalysatorträger, Zinn und Palladium, wobei der Katalysator von 1,0 Gewichtsprozent bis 6 Gewichtsprozent Zinn und von 0,5 Gewichtsprozent bis 3,5 Gewichtsprozent Palladium basierend auf dem Gesamtgewicht des Katalysators, umfasst.

6. Katalysator gemäß Anspruch 4, wobei der Katalysator ein Bimetallkatalysator ist, umfassend Zinn und Palladium, und wobei der Katalysator mindestens 0,25 Gewichtsprozent Palladium basierend auf dem Gesamtgewicht des Katalysators, umfasst, wobei der Katalysator optional 0,5 Gewichtsprozent bis 12 Gewichtsprozent Zinn und 0,25 Gewichtsprozent bis 6 Gewichtsprozent Palladium umfasst.

7. Katalysator gemäß einem der vorherigen Ansprüche, wobei der Katalysatorträger ein organischer oder anorganischer Träger ist, zum Beispiel ein Katalysatorträger, ausgewählt aus der Gruppe bestehend aus Kohlenstoffträgern, Oxidträgern und Silikatträgern, beispielsweise aus $SiO_2$, $TiO_2$, $Al_2O_3$, $CeO_2$, $Nb_2O_5$, $ZrO_2$, $W_2O_3$, $Fe_2O_3$, Siliciumdioxid-Aluminiumoxid, Molekularsieben und Zeolithen und Gemischen davon, oder wobei der Katalysatorträger optional ein saurer Katalysatorträger ist.

8. Katalysator gemäß Anspruch 7, wobei der Träger (i) $SiO_2$ enthält oder ist, oder (ii) $TiO_2$ umfasst oder ist, oder (iii) ein Gemisch aus $SiO_2$ und $TiO_2$ ist.

9. Katalysator gemäß Anspruch 8, wobei der Träger $TiO_2$ umfasst oder ist und der Katalysator (i) ein TPR-Profil aufweist, das gemäß dem in der Beschreibung beschriebenen Verfahren bestimmt wird und durch das Vorhandensein eines positiven Peaks zwischen 140 °C und 200 °C gekennzeichnet ist; oder

wobei der Träger SiO$_2$ umfasst oder ist, und der Katalysator ein Pulver-Röntgenbeugungsdiagramm, bestimmt gemäß dem in der Beschreibung beschriebenen Verfahren, **gekennzeichnet durch** das Fehlen von unterscheidbaren Peaks (2θ), die Pd-haltigen oder Sn-haltigen Spezies zugeordnet werden können, oberhalb des SiO$_2$-Trägerbeugungsdiagramms, zum Beispiel das Fehlen von unterscheidbaren Peaks bei 34° ± 0,5 2θ, die Pd-haltigen oder Sn-haltigen Spezies zugeordnet werden können.

10. Verfahren zum Herstellen eines Katalysators gemäß einem der Ansprüche 1-9, umfassend (i) Abscheiden von Zinn und einem oder mehreren von Palladium-, Platin- und Nickelvorläufern auf einem Katalysatorträger zum Bilden eines Katalysatorvorläufers, (ii) Oxidieren des Katalysatorvorläufers in einem ersten Oxidationsschritt zum Bilden eines oxidierten Katalysators, (iii) Reduzieren des oxidierten Katalysators zum Bilden eines reduzierten Katalysators und (iv) Oxidieren des
reduzierten Katalysators in einem zweiten Oxidationsschritt, wobei die Temperatur des zweiten Oxidationsschritts von 250 °C bis 800 °C ist.

11. Verfahren gemäß Anspruch 10, wobei das Zinn und eines oder mehrere von Palladium, Platin und Nickel gleichzeitig oder nacheinander, vorzugsweise gleichzeitig, beispielsweise durch Co-Imprägnierung abgeschieden werden, und/oder
wobei das Zinn und einer oder mehrere der Palladium-, Platin- und Nickelvorläufer wässrige Salzvorläufer sind, zum Beispiel Zinnchlorid und Palladiumnitrat, und der Katalysatorvorläufer vor dem ersten Oxidationsschritt getrocknet wird; und/oder wobei das Verfahren gemäß dem in Anspruch 3 definierten Verfahren durchgeführt wird.

12. Verwendung eines Katalysators gemäß einem der Ansprüche 1-9, oder das durch das Verfahren gemäß den Ansprüchen 10 oder 11 für die direkte Synthese von Wasserstoffperoxid erlangt werden kann.

13. Verfahren zum Herstellen von Wasserstoffperoxid durch direkte Synthese, das Verfahren umfassend ein Umwandeln von Wasserstoff und Sauerstoff zu Wasserstoffperoxid in Anwesenheit eines Katalysators gemäß einem der Ansprüche 1-9.

14. Verfahren gemäß Anspruch 13, das in einem flüssigen Medium, beispielsweise einem wässrigen flüssigen Medium, das Wasser enthält, durchgeführt wird, optional wobei das wässrige flüssige Medium Wasser und ein mit Wasser mischbares Lösungsmittel umfasst, wobei das wässrige flüssige Medium optional wässriges Methanol ist; und/oder wobei die Temperatur von 1 °C bis 50 °C ist, optional wobei der Druck von 1 MPa bis 8 MPa ist; und/oder wobei das Verfahren in Abwesenheit von Säure und/oder Halogenid-Stabilisatoren durchgeführt wird.

## Revendications

1. Un catalyseur approprié pour la synthèse directe du peroxyde d'hydrogène, ledit catalyseur comprenant un support de catalyseur, de l'étain et un ou plusieurs parmi le palladium, le platine et le nickel, dans lequel ledit catalyseur peut être obtenu par un procédé comprenant : (i) la préparation, la fourniture ou l'obtention d'un précurseur de catalyseur comprenant ledit support de catalyseur, de l'étain et un ou plusieurs parmi le palladium, le platine et le nickel (ii) le chauffage du précurseur de catalyseur dans une première étape, formant un catalyseur traité thermiquement, (iii) le traitement du catalyseur traité thermiquement de l'étape (ii) dans des conditions réductrices, formant un catalyseur réduit, et (iv) le traitement du catalyseur réduit de l'étape (iii) dans des conditions oxydantes, dans lequel les conditions oxydantes comprennent le chauffage du catalyseur réduit dans une atmosphère oxydante à une température élevée, dans lequel la température élevée est de 250 °C à 800 °C.

2. Le catalyseur selon la revendication 1, dans lequel le précurseur de catalyseur est préparé par co-imprégnation d'étain et d'un ou de plusieurs parmi le palladium, le platine dans le support de catalyseur.

3. Le catalyseur selon l'une quelconque des revendications précédentes, dans lequel les étapes (ii) et / ou (iv) comprennent le traitement thermique du précurseur de catalyseur et / ou du catalyseur réduit à une température de 250 °C à 600 °C ; et / ou
dans lequel l'étape (iii) est réalisée dans une atmosphère réductrice à une température de 100 °C à 300 °C.

4. Le catalyseur selon l'une quelconque des revendications précédentes, dans lequel la quantité combinée d'étain et d'un ou de plusieurs parmi le palladium, le platine et le nickel est inférieure à 15 % en poids du catalyseur, et dans lequel le catalyseur comprend au moins 0,25 % en poids d'un ou de plusieurs parmi le palladium, le platine et le nickel.

5. Un catalyseur approprié pour la synthèse directe du peroxyde d'hydrogène, dans lequel ledit catalyseur est un catalyseur bimétallique comprenant un support de catalyseur, de l'étain et du palladium, dans lequel le catalyseur comprend de 1,0 % en poids à 6 % en poids d'étain et de 0,5 % en poids à 3,5 % en poids de palladium, sur la base du poids total du catalyseur.

6. Le catalyseur selon la revendication 4, dans lequel le catalyseur est un catalyseur bimétallique comprenant de l'étain et du palladium, et dans lequel le catalyseur comprend au moins 0,25 % en poids de palladium, sur la base du poids total du catalyseur, éventuellement dans lequel le catalyseur comprend de 0,5 % en poids à 12 % en poids d'étain et de 0,25 % en poids à 6 % en poids de palladium.

7. Le catalyseur selon l'une quelconque des revendications précédentes, dans lequel le support de catalyseur est un support organique ou inorganique, par exemple, un support de catalyseur choisi dans le groupe constitué par les supports de carbone, les supports d'oxyde et les supports de silicate, par exemple, parmi $SiO_2$, $TiO_2$, $Al_2O_3$, $CeO_2$, $Nb_2O_5$, $ZrO_2$, $W_2O_3$, $Fe_2O_3$, la silice-alumine, les tamis moléculaires et les zéolites, et des mélanges de ceux-ci, ou éventuellement dans lequel le support de catalyseur est un support de catalyseur acide.

8. Le catalyseur selon la revendication 7, dans lequel le support (i) comprend ou est du $SiO_2$, ou (ii) comprend ou est du $TiO_2$, ou (iii) est un mélange de $SiO_2$ et de $TiO_2$.

9. Le catalyseur selon la revendication 8, dans lequel le support comprend ou est du $TiO_2$, et le catalyseur a (i) un profil RTP (réduction en température programmée), tel que déterminé selon le procédé décrit dans la description, **caractérisé par** la présence d'un pic positif entre 140 °C et 200 °C ; ou
dans lequel le support comprend ou est du $SiO_2$, et le catalyseur un diagramme de diffraction des rayons X sur poudre, tel que déterminé selon le procédé décrit dans la description, **caractérisé par** l'absence de tout pic perceptible ($2\theta$) attribuable à des espèces contenant du Pd ou du Sn au-dessus du diagramme de diffraction du support de $SiO_2$, par exemple, l'absence de tout pic perceptible à 34 °$\pm$0,5 $2\theta$ attribuable aux espèces contenant du Pd ou du Sn.

10. Un procédé de fabrication d'un catalyseur selon l'une quelconque des revendications 1 à 9, comprenant (i) le dépôt d'étain et d'un ou de plusieurs parmi les précurseurs de palladium, de platine et de nickel sur un support de catalyseur pour former un précurseur de catalyseur, (ii) l'oxydation du précurseur de catalyseur dans une première étape d'oxydation pour former un catalyseur oxydé, (iii) la réduction du catalyseur oxydé pour former un catalyseur réduit et (iv) l'oxydation du catalyseur réduit dans une deuxième étape d'oxydation, dans lequel la température de la deuxième étape d'oxydation est de 250 °C à 800 °C.

11. Le procédé selon la revendication 10, dans lequel l'étain et un ou plusieurs parmi le palladium, le platine et le nickel sont déposés simultanément ou séquentiellement, de préférence simultanément, par exemple, par co-imprégnation et / ou
dans lequel l'étain et un ou plusieurs parmi les précurseurs de palladium, de platine et de nickel sont des précurseurs de sel aqueux, par exemple, le chlorure d'étain et le nitrate de palladium, et le précurseur de catalyseur est séché avant la première étape d'oxydation ; et / ou
dans lequel le procédé est mené selon le procédé défini dans la revendication 3.

12. Utilisation d'un catalyseur selon l'une quelconque des revendications 1 à 9 ou pouvant être obtenu par le procédé selon les revendications 10 ou 11 pour la synthèse directe du peroxyde d'hydrogène.

13. Un procédé de fabrication de peroxyde d'hydrogène par synthèse directe, ledit procédé comprenant la conversion d'hydrogène et d'oxygène en peroxyde d'hydrogène en présence d'un catalyseur selon l'une quelconque des revendications 1 à 9.

14. Le procédé selon la revendication 13, qui est mené dans un milieu liquide, par exemple, un milieu liquide aqueux comprenant de l'eau, éventuellement dans lequel le milieu liquide aqueux comprend de l'eau et un solvant miscible à l'eau, éventuellement dans lequel le milieu liquide aqueux est du méthanol aqueux ; et / ou
dans lequel la température est de 1 °C à 50 °C, éventuellement dans lequel la pression est de 1 MPa à 8 MPa ; et / ou
dans lequel le procédé est mené en l'absence de stabilisateurs d'acide et / ou d'halogénure.

FIGURE 1

Signal / mV

Temperature °C

5% Pd / TiO$_2$

5% Sn / TiO$_2$

TiO$_2$

EP 3 033 170 B1

FIGURE 2

Signal / mV

Temperature / °C

1% Pd / 4% Sn / TiO$_2$

2.5% Pd / 2.5% Sn / TiO$_2$

4% Pd / 1% Sn / TiO$_2$

EP 3 033 170 B1

**FIGURE 3**

FIGURE 4

FIGURE 5

1% Pd 4% Sn / SiO$_2$ c. 500°C r. 300°C

1% Pd 4% Sn / SiO$_2$ c. 500°C r. 200°C

1% Pd 4% Sn / SiO$_2$ c. 500°C r. 100°C

1% Pd 4% Sn / SiO$_2$ c. 500°C

1% Pd / SiO$_2$ c. 500°C r. 100°C

1% Pd / SiO$_2$ c. 500°C

Intensity a.u.

2θ

FIGURE 6

Pd(3d)

FIGURE 7

**FIGURE 8**

EP 3 033 170 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007007075 A
- WO 2012171892 A
- US 537840 A